**Europäisches Patentamt**

**European Patent Office**

**Office européen des brevets**

(19)

(11) **EP 1 341 080 A1**

(12) ## DEMANDE DE BREVET EUROPEEN

(43) Date de publication:
**03.09.2003 Bulletin 2003/36**

(51) Int Cl.⁷: $G06F\ 9/38$

(21) Numéro de dépôt: **03075448.5**

(22) Date de dépôt: **17.02.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: **26.02.2002 FR 0202395**

(71) Demandeur: **Koninklijke Philips Electronics N.V.**
**5621 BA Eindhoven (NL)**

(72) Inventeurs:
• **Duranton, Marc**
**75008 Paris (FR)**

• **Pasquier, Laurent**
**75008 Paris (FR)**
• **Rivierre-Vier, Valérie**
**75008 Paris (FR)**
• **Zhao-Huang Qin**
**75008 Paris (FR)**

(74) Mandataire: **Chaffraix, Jean**
**Société Civile S.P.I.D.**
**156, Boulevard Haussmann**
**75008 Paris (FR)**

(54) **Système de traitement d'instructions d'un programme**

(57)    L'invention concerne un système de traitement pour le traitement d'instructions (I1) de programme par des unités de calcul (16). Afin de satisfaire des contraintes de type temps réel, des instants (t1) auxquels les instructions doivent être exécutées sont définis, et les instructions sont effectivement exécutées à ces instants. Pour cela, le système de traitement comprend des moyens de comparaison (14) de ces instants avec un temps d'exécution (13) et des moyens de déclenchement (15) aptes à faire exécuter ou non les instructions par les unités de calcul en fonction de cette comparaison. Un bloc d'instructions est associé à un label (TAG1) représentant un instant auquel il doit être exécuté. Les labels sont stockés dans une mémoire adressable par le contenu (22) pouvant comparer un label donné avec le temps d'exécution et délivrer un descripteur (B1*) du bloc d'instructions correspondant à ce label lorsque le label est égal au temps d'exécution.

FIG. 2

EP 1 341 080 A1

**Description**

DOMAINE TECHNIQUE

La présente invention concerne un système de traitement comprenant au moins une unité de calcul destinée à exécuter au moins un bloc d'une ou plusieurs instructions, ledit bloc étant associé à au moins un instant auquel il doit être exécuté par ladite unité de calcul, ledit instant étant déterminé à partir d'un temps d'ordonnancement.
Elle concerne également un procédé de traitement comprenant au moins une étape d'exécution réalisée par une unité de calcul destinée à exécuter au moins un bloc d'une ou plusieurs instructions associé à au moins un instant auquel il doit être exécuté par ladite unité de calcul, ledit instant étant déterminé à partir d'un temps d'ordonnancement.
Elle concerne également un programme comprenant des instructions de code de programme pour l'exécution des étapes de ce procédé.
L'invention trouve une application, par exemple, dans un système dédié à une application avec des contraintes de type temps réel, tel un dispositif de traitement de données vidéo. Par exemple, un processeur de rendu d'images peut constituer un tel dispositif de traitement de données vidéo. Ce processeur de rendu d'images peut être inclus, par exemple, dans un décodeur, un dispositif récepteur décodeur pour télévision (en anglais «Set Top Box»), ou une télévision.

ETAT DE LA TECHNIQUE ANTERIEURE

Des systèmes de traitement comprennent une ou plusieurs unités de calcul destinées à exécuter des instructions constituant au moins un programme. Dans certains de ces systèmes, il est possible de connaître, lors d'une étape d'ordonnancement, les unités de calcul par lesquelles les instructions doivent être exécutées, ainsi que les instants auxquels ces instructions doivent être exécutées. La demande de brevet européen EP 0 840 213 décrit notamment un système de traitement dans lequel une telle étape d'ordonnancement est mise en oeuvre. Les instants auxquels les instructions doivent être exécutées sont déterminés à partir d'un temps d'ordonnancement, qui correspond à une horloge. Ces instants correspondent donc à un certain nombre de cycles d'horloge.
L'invention objet de la demande de brevet EP 0 840 213 a pour but de déterminer les instants auxquels les instructions doivent être exécutées, pour faire exécuter les instructions dans un ordre défini par ces instants. Cependant, dans cette demande de brevet, les instants auxquels les instructions doivent être exécutées ne sont pris en compte que pour définir l'ordre d'exécution des instructions par une unité de calcul, c'est à dire qu'une instruction peut être effectivement exécutée à un instant différent de celui défini lors de l'étape d'ordonnancement. Ceci présente un inconvénient, notamment dans des systèmes dédiés à des applications avec des contraintes de type temps réel. Par exemple, dans un système dédié à un affichage de données audiovisuelles, il est important que des images affichées sur un écran soient synchronisées avec des paroles. Ceci est difficilement réalisable si les instructions ne sont pas effectivement exécutées aux instants définis lors de l'étape d'ordonnancement.
La demande de brevet européen EP 0 959 575 décrit un système de traitement dans lequel une instruction est effectivement exécutée à l'instant auquel elle doit être exécutée. Pour ce faire, chaque instruction est associée à un instant d'exécution, et cet instant d'exécution est comparé à un temps de référence. Lorsque l'instant d'exécution est égal au temps de référence, l'instruction est exécutée. Pour ce faire, le système utilise un comparateur ou une unité logique arithmétique, qui compare, pour chaque instruction, son instant d'exécution avec le temps de référence. Un tel système nécessite un programme pour comparer les instants d'exécution avec le temps de référence, ce qui est un inconvénient, car un tel programme ralentit le système et augmente la consommation d'énergie du système.

EXPOSE DE L'INVENTION

Un but de l'invention est de proposer un système de traitement plus rapide et présentant une consommation d'énergie réduite.
Pour ce faire, l'invention propose un système de traitement comprenant au moins une unité de calcul destinée à exécuter au moins un bloc d'une ou plusieurs instructions, ledit bloc étant associé à au moins un instant auquel il doit être exécuté par ladite unité de calcul, ledit instant étant déterminé à partir d'un temps d'ordonnancement, ledit système de traitement comprenant des moyens de comparaison dudit instant avec un temps d'exécution lié au temps d'ordonnancement, et des moyens de déclenchement pour faire exécuter ou non ledit bloc d'instructions par l'unité de calcul en fonction de ladite comparaison, un bloc d'instructions étant associé à au moins un label représentant au moins un instant auquel il doit être exécuté, les labels étant stockés dans une mémoire adressable par le contenu apte à comparer un label donné avec le temps d'exécution et à délivrer un descripteur du bloc d'instructions correspondant audit label donné lorsque le label donné est égal au temps d'exécution.
Selon l'invention, une mémoire adressable par le contenu, par exemple une mémoire associative, comprend les moyens de comparaison et de déclenchement. De la sorte, la comparaison et le déclenchement, étant réalisés par un dispositif matériel, sont des opérations plus rapides et moins consommatrices d'énergie que lorsqu'elles sont réalisées par un dispositif logiciel. En effet, afin de comparer un temps d'exécution avec un instant auquel un bloc d'instructions doit être exécuté, un dispositif logiciel met en oeuvre un nombre important d'opérations. Par conséquent, pour faire exécuter un bloc d'instructions comprenant un nombre donné d'instructions, il est possible qu'un dispositif logiciel nécessite un nombre d'opérations de l'ordre de ce nombre d'instructions donné. Ceci n'est pas optimal en terme de rapidité et de consommation d'énergie.

Dans un mode de réalisation avantageux de l'invention, un bloc d'instructions est en outre associé à au moins un identifiant indiquant l'unité de calcul par laquelle il doit être exécuté, le descripteur étant envoyé à un séquenceur d'instructions apte à faire exécuter les instructions du bloc correspondant audit descripteur par l'unité de calcul correspondant audit identifiant.

Ce mode de réalisation est particulièrement avantageux lorsque plusieurs unités de calcul exécutent en parallèle différents blocs d'instructions. Les identifiants, qui peuvent être stockés, par exemple, dans les blocs d'instructions ou dans le séquenceur d'instructions, permettent au séquenceur d'instructions de connaître la ou les unités de calcul vers lesquelles il doit envoyer les instructions de blocs d'instructions donnés. Le séquenceur d'instructions assure ainsi une communication efficace entre les unités de calcul et une mémoire centrale où sont stockés les blocs d'instructions.

BREVE DESCRIPTION DES FIGURES

L'invention sera mieux comprise et d'autres détails apparaîtront dans la description qui va suivre en regard des dessins annexés qui sont donnés à titre d'exemples non limitatifs et dans lesquels :

- la figure 1 est un schéma bloc illustrant des caractéristiques d'un système de traitement selon l'invention ;
- la figure 2 illustre la réalisation des moyens de comparaison et de déclenchement de la figure 1 ;
- la figure 3 illustre un système de traitement selon l'invention, comprenant plusieurs unités de calcul ;
- les figures 4a et 4b illustrent un exemple d'utilisation du système de traitement de la figure 3 dans un processeur de rendu d'images.

EXPOSE DETAILLE D'AU MOINS UN MODE DE REALISATION DE L'INVENTION

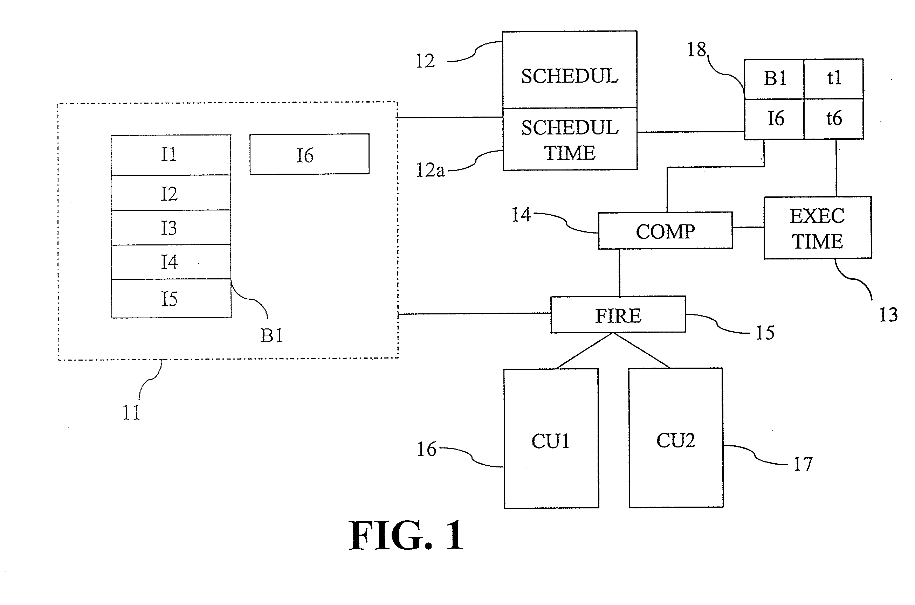

La figure 1 illustre un système de traitement selon l'invention. Un tel système de traitement comprend un programme 11 comprenant un bloc d'instructions B1 et une instruction I6, des moyens de comparaison 14, des moyens de déclenchement 15, une première unité de calcul 16 et une deuxième unité de calcul 17. Le bloc d'instructions B1 comprend cinq instructions I1 à I5. On notera que l'expression « bloc d'instructions » désigne aussi bien un bloc comprenant plusieurs instructions qu'un bloc comprenant une seule instruction. Par exemple, l'instruction I6 est un bloc d'instructions comprenant une seule instruction.

Un dispositif d'ordonnancement 12 est également représenté sur la figure 1. Il est chargé de définir par quelle unité de calcul un bloc d'instructions doit être exécuté, et à quel instant il doit être exécuté. Le système selon l'invention peut comprendre un tel dispositif d'ordonnancement 12. Dans ce cas, il est notamment possible d'effectuer un ordonnancement dynamique, c'est à dire pendant l'exécution du programme 11. Le dispositif d'ordonnancement 12 peut également être externe au système selon l'invention. Dans ce cas, un ordonnancement statique est effectué, c'est à dire antérieur à l'exécution du programme 11. Dans ce cas, des informations fournies par le dispositif d'ordonnancement 12 sont accessibles au système selon l'invention. Ces informations concernent notamment l'unité de calcul par laquelle un bloc d'instructions doit être exécuté, l'instant auquel il doit être exécuté et un temps d'ordonnancement 12a utilisé par le dispositif d'ordonnancement. Ces informations sont obtenues lors d'une étape d'ordonnancement effectuée par le dispositif d'ordonnancement 12, ladite étape d'ordonnancement pouvant être effectuée, par exemple, à la compilation du programme 11.

Pour définir des instants auxquels les blocs d'instructions doivent être exécutés, ainsi que des unités de calcul devant exécuter ces blocs d'instructions, le dispositif d'ordonnancement 12 prend en compte :

- des contraintes de ressources, par exemple les deux unités de calcul 16 et 17 ;
- des blocs d'instructions à exécuter, par exemple le bloc d'instructions B1 et l'instruction I6 ;
- des contraintes de temps, par exemple des contraintes de type temps réel ;

Le dispositif d'ordonnancement 12 doit alors résoudre un programme linéaire pour satisfaire ces différentes contraintes. Une telle résolution est connue de l'homme du métier. Par exemple, la demande de brevet EP 0 840 213 décrit comment sont définis les instants auxquels des instructions ou des blocs d'instructions doivent être exécutés.

Les instants auxquels les blocs d'instructions doivent être exécutés sont déterminés à partir du temps d'ordonnancement 12a. Si l'on suppose que l'exécution du programme 11 nécessite une durée T, le temps d'ordonnancement 12a commence, par exemple, à un instant zéro pour se terminer à un instant T. Dans ce cas, un instant auquel un bloc d'instructions doit être exécuté est compris entre zéro et T.

Lors de l'exécution du programme 11, les instants auxquels les blocs d'instructions doivent être exécutés sont comparés à un temps d'exécution 13 grâce aux moyens de comparaison 14. Ces instants peuvent être par exemple stockés dans une mémoire 18, qui peut faire partie ou non du dispositif d'ordonnancement 12. Ces instants peuvent également être stockés dans les blocs d'instructions du programme 11 ou dans une autre partie du programme 11. Dans ce cas, les moyens de comparaison 14 ont accès au programme 11 pour effectuer la comparaison avec le temps d'exécution 13, par exemple grâce à un programme de comparaison temporelle effectué par un logiciel.

Le temps d'exécution 13 peut correspondre à un temps réel. Ce temps d'exécution 13 peut également correspondre à un nombre, entier ou non, de cycles d'une horloge. Ce temps d'exécution 13 est lié au temps d'ordonnancement 12a. Par exemple, dans l'exemple cité ci-dessus, le temps d'exécution 13 peut, comme le temps d'ordonnancement 12a, commencer à un instant zéro et se terminer à un instant T, l'instant zéro correspondant au début d'exécution du programme 11.

Ainsi, en se basant sur des bases de temps communes pour définir les instants auxquels les blocs d'instructions doivent être exécutés et pour faire exécuter les instructions grâce au dispositif de déclenchement 15, il est possible de faire effectivement exécuter les blocs d'instructions aux instants définis par le dispositif d'ordonnancement 12. En effet, le dispositif de déclenchement 15 fait exécuter un bloc d'instructions par une unité de calcul lorsque l'instant auquel le bloc d'instructions doit être exécuté est lié au temps d'exécution 13 par un critère prédéfini. Ce critère prédéfini peut être, par exemple, une égalité entre ledit instant et le temps d'exécution 13.

D'autres critères peuvent être choisis, notamment lorsque plusieurs instants ont été déterminés pour l'exécution du bloc d'instructions, par exemple, lorsque l'instant auquel le bloc d'instructions doit être exécuté est défini dans un intervalle de temps. Dans ce cas, le dispositif de déclenchement 15 peut faire exécuter le bloc d'instructions lorsque le temps d'exécution 13 se trouve à l'intérieur de cet intervalle de temps.

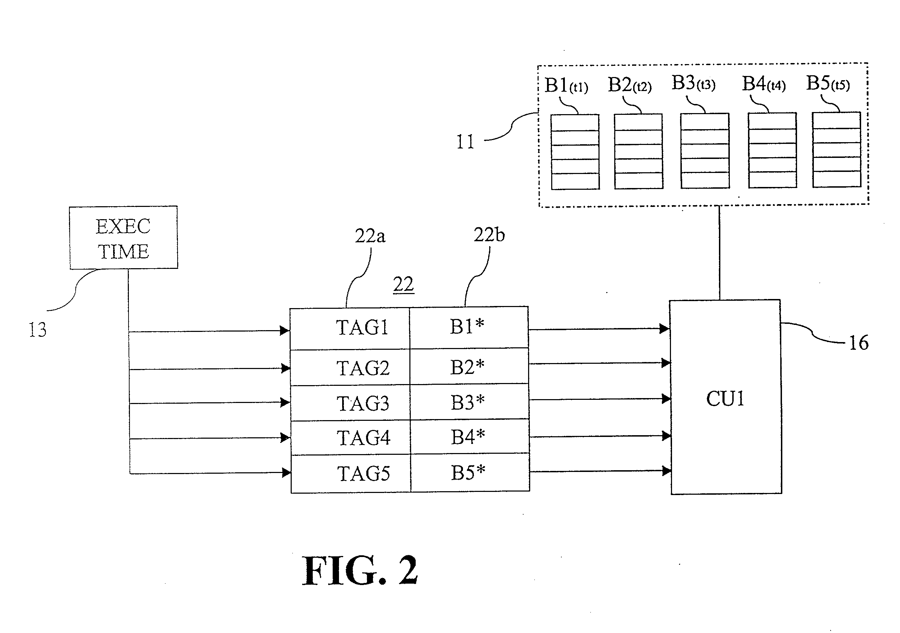

Le dispositif de déclenchement 15 peut également faire exécuter le bloc d'instructions lorsqu'il existe un écart prédéfini entre le temps d'exécution 13 et l'instant auquel le bloc d'instructions doit être exécuté. En effet, un certain temps de latence est nécessaire entre la comparaison par le dispositif de comparaison 14 et un début d'exécution du bloc d'instructions par l'unité de calcul. L'écart prédéfini entre le temps d'exécution 13 et l'instant auquel le bloc d'instructions doit être exécuté prend en compte ce temps de latence. On notera que ce temps de latence peut également être pris en compte en le retranchant à l'instant auquel le bloc d'instructions doit être exécuté, comme il sera précisé sur la figure 2. Ce temps de latence peut également être pris en compte pour définir le temps d'exécution 13 en fonction du temps d'ordonnancement 12a, comme il sera précisé sur la figure 2.

Lorsqu'un des instants définis par le dispositif d'ordonnancement remplit le critère prédéfini, le dispositif de déclenchement 15 accède au bloc d'instructions correspondant et envoie ce bloc d'instructions à l'unité de calcul devant l'exécuter. Le dispositif de déclenchement 15 peut également envoyer une information à cette unité de calcul, lui indiquant qu'elle doit charger les instructions de ce bloc d'instructions afin de les exécuter.

La figure 2 illustre la réalisation du dispositif de comparaison 14 et du dispositif de déclenchement 15 . Les moyens de comparaison 14 et de déclenchement 15 sont constitués par une mémoire adressable par le contenu 22 qui comprend une partie labels 22a et une partie données 22b. Dans cet exemple, le programme 11 comprend cinq blocs d'instructions B1 à B5, qui doivent être exécutés par la première unité de calcul 16, à des instants t1 à t5.

Les instants t1 à t5 auxquels les blocs d'instructions doivent être exécutés, qui sont définis par le dispositif d'ordonnancement 12 de la figure 1, sont labellisés, c'est à dire, par exemple, codés sur un certain nombre de bits. Dans cet exemple, les instants t1 à t5 correspondent à des nombres entiers de cycles d'horloge et sont labellisés pour obtenir des labels TAG1 à TAG5 codés sur seize bits. Ces labels sont stockés dans la partie labels 22a de la mémoire adressable par le contenu 22. Le temps d'exécution 13, qui est un nombre entier de cycles d'horloge incrémenté de une unité à chaque cycle d'horloge, est également codé sur seize bits.

Dans la partie données 22b de la mémoire adressable par le contenu 22 sont stockés des descripteurs B1* à B5*, qui indiquent quel bloc d'instructions correspond à un label donné.

Le fonctionnement de la mémoire adressable par le contenu 22 est le suivant. A chaque cycle d'horloge, le temps d'exécution 13 est comparé à tous les labels TAG1 à TAG5. Lorsque l'un des labels TAG1 à TAG5 est égal au temps d'exécution 13, le descripteur correspondant est envoyé à la première unité de calcul 16, qui accède alors au programme 11 pour charger le bloc d'instructions correspondant à ce descripteur, afin d'exécuter ce bloc d'instructions.

Si l'on suppose qu'à un instant donné, le temps d'exécution 13 est égal à TAG1, et que l'envoi du descripteur B1* à la première unité de calcul 16 ainsi que le chargement du bloc d'instructions B1 par la première unité de calcul 16 nécessitent une durée $\Delta t$, le bloc d'instructions B1 sera exécuté à un instant t1+$\Delta t$. Cela peut constituer un problème, car il est possible que l'on désire exécuter le bloc d'instructions B1 à l'instant exact défini par le dispositif d'ordonnancement 12, pour satisfaire à des contraintes de type temps réel.

Une solution à ce problème consiste à prendre en compte cette durée $\Delta t$, lors de l'ordonnancement effectué par le dispositif d'ordonnancement 12 ou lors de la labellisation. Par exemple, en retranchant cette durée $\Delta t$ de l'instant t1 auquel le bloc d'instructions B1 doit être exécuté, en labellisant l'instant (t1-$\Delta t$) et en plaçant le label obtenu dans la partie labels 22a de la mémoire adressable par le contenu 22, le bloc d'instructions B1 sera effectivement exécuté à l'instant t1.

Une autre solution consiste à décaler de la durée $\Delta t$ le temps d'exécution 13, par rapport au temps d'ordonnancement 12a. Cette solution est avantageuse lorsqu'une seule unité de calcul exécute le programme 11. C'est le cas dans l'exemple illustré sur la figure 2. Lorsque plusieurs unités de calcul sont requises pour l'exécution du programme 11, cette solution n'est avantageuse que si les temps de latence sont identiques pour toutes les unités de calcul, et égaux à $\Delta t$.

Dans le cas où le temps d'ordonnancement 12a commence à un instant zéro et se termine à un instant T, le temps d'exécution 13 commence à un instant $\Delta t$ et se termine à un instant $T+\Delta t$. L'exécution du programme 11 commence alors à l'instant $\Delta t$.

Ainsi, le descripteur B1* sera envoyé à la première unité de calcul 16 à un instant t1-$\Delta t$, et le bloc d'instructions B1 sera donc exécuté à l'instant t1 défini par le dispositif d'ordonnancement 12.

On notera que la durée $\Delta t$ peut prendre en compte différents facteurs, qui dépendent, dans l'exemple illustré sur la figure 2, de la mémoire adressable par le contenu 22, da la première unité de calcul 16 et du programme 11.

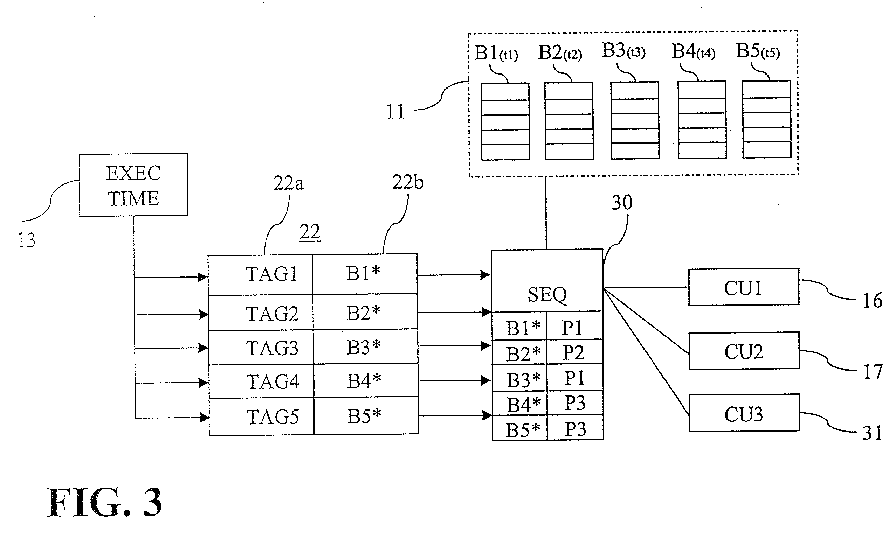

La figure 3 illustre un mode de réalisation avantageux de l'invention. Dans ce mode de réalisation, les blocs d'instructions B1 à B5 peuvent être exécutés par la première unité de calcul 16, la deuxième unité de calcul 17 ou une troisième unité de calcul 31. Un séquenceur d'instructions 30 permet de gérer un tel système de traitement selon ce mode de réalisation avantageux de l'invention.

L'unité de calcul par laquelle un bloc d'instructions doit être exécuté est définie par le dispositif d'ordonnancement, d'une manière connue de l'homme du métier. Ceci est décrit, par exemple, dans la demande de brevet EP 0 840 213. Les unités de calcul 16, 17 et 31 sont identifiées par des identifiants P1, P2 et P3. Ces identifiants peuvent être, par exemple, des adresses des unités de calcul 16, 17 et 31. Le séquenceur d'instructions 30 comprend une mémoire dans laquelle un descripteur de bloc d'instructions est associé à au moins un identifiant. Dans l'exemple illustré sur la figure 3, le bloc d'instructions B1 doit être exécuté par la première unité de calcul 16, le bloc d'instructions B2 par la deuxième unité de calcul 17, le bloc d'instructions B3 par la première unité de calcul 16, le bloc d'instructions B4 par la troisième unité de calcul 31 et le bloc d'instructions B5 par la troisième unité de calcul 31.

Lorsqu'un descripteur est envoyé au séquenceur d'instructions 30, de la même manière que celle décrite dans la description de la figure 2, le séquenceur d'instructions 30 accède au programme 11 afin de charger le bloc d'instructions correspondant à ce descripteur, et envoie ce bloc d'instructions à l'unité de calcul correspondant à l'identifiant associé audit descripteur. On notera que le séquenceur d'instructions 30 peut également envoyer une information à l'unité de calcul correspondant à l'identifiant associé audit descripteur. Cette information indique que cette unité de calcul doit exécuter le bloc d'instructions correspondant audit descripteur. Cette unité de calcul se charge alors d'accéder au programme 11 pour charger ce bloc d'instructions afin de l'exécuter.

Le séquenceur d'instructions 30 peut être, par exemple, une machine d'états. Lorsqu'il reçoit un descripteur, le séquenceur d'instructions 30 passe d'un état oisif à un état de lecture. Pendant cet état de lecture, le séquenceur d'instructions 30 accède au programme 11 pour lire les instructions du bloc d'instructions correspondant à ce descripteur. Lorsque toutes ces instructions ont été lues, le séquenceur d'instructions 30 passe dans un état d'écriture, afin d'envoyer ces instructions à l'unité de calcul correspondant à l'identifiant associé à ce descripteur. D'autres solutions peuvent être envisagées. Par exemple, le séquenceur d'instructions peut lire une première instruction du bloc d'instructions, envoyer cette première instruction à l'unité de calcul, puis lire une deuxième instruction, et ainsi de suite jusqu'à ce que toutes les instructions du bloc d'instructions considéré soient envoyées à l'unité de calcul.

On notera également que les identifiants des unités de calcul peuvent être stockés dans des endroits autres que le séquenceur d'instructions 30, par exemple dans la partie données 22b de la mémoire adressable par le contenu 22, dans les blocs d'instructions ou encore dans une mémoire externe au séquenceur d'instructions 30. Dans chacun de ces cas, le fonctionnement du système de traitement se déduit aisément du fonctionnement décrit ci-dessus.

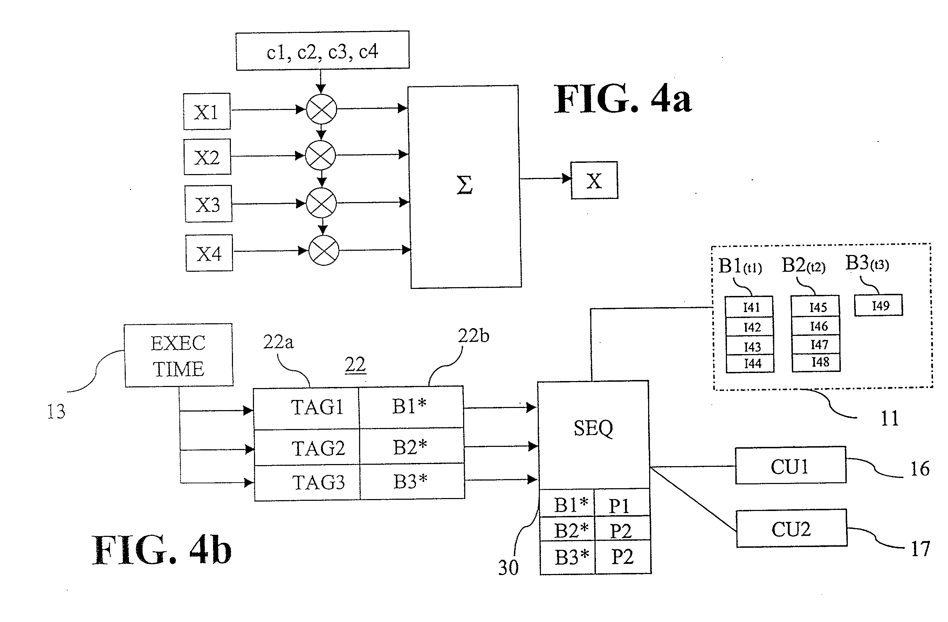

Les figures 4a et 4b illustrent un exemple d'utilisation du système de traitement selon l'invention dans un processeur de rendu d'images.

Il existe différents formats pour un affichage de données vidéo. Par exemple, un standard de télévision numérique américaine ATSC définit dix huit formats de diffusion différents, comme le format standard où une image comprend 480 lignes de 720 pixels chacune, ou le format haute définition où une image comprend 1080 lignes de 1920 pixels chacune. Lorsque des données vidéo sont diffusées au format haute définition, il est nécessaire de les convertir au format standard pour pouvoir les visualiser sur une télévision dont l'écran n'est pas compatible avec le format haute définition. Un processeur de rendu d'images permet notamment d'effectuer une telle conversion.

La figure 4a illustre une opération effectuée par le processeur de rendu d'images, en vue d'obtenir une valeur X d'un pixel donné dans une image de définition standard, en fonction de valeurs X1 et X2 de pixels situés au dessus du pixel donné dans une image de haute définition et de valeurs X3 et X4 de pixels situés au dessous du pixel donné dans une image de haute définition. Les valeurs de ces pixels peuvent être, par exemple, des niveaux de gris. Cette opération permet d'obtenir la valeur X défini par l'expression :

$$X=c_1X_1+c_2X_2+c_3X_3+c_4X_4.$$

Dans cette expression $c_1, c_2, c_3$ et $c_4$ sont des coefficients de filtrage, qui peuvent être stockés, par exemple, dans une mémoire accessible par la deuxième unité de calcul 17.

La figure 4b illustre un système de traitement selon l'invention permettant l'ordonnancement et l'exécution d'instructions pour réaliser cette opération. Le premier bloc d'instructions B1 comprend quatre instructions I41 à I44, définies de la manière suivante :

I41 : chargement de X1
I42 : chargement de X2
I43 : chargement de X3
I44 : chargement de X4

Grâce à ces instructions I41 à I44, les valeurs X1 à X4 sont chargées dans la première unité de calcul 16 à un instant t1 défini par le dispositif d'ordonnancement 12.

Le deuxième bloc d'instructions B2 comprend quatre instructions I45 à I48, définies de la manière suivante :

I45: multiplication de X1 et c1
I46 : multiplication de X2 et c2
I47 : multiplication de X3 et c2
I48 : multiplication de X4 et c4

Grâce à ces instructions I45 à I48 exécutées par la deuxième unité de calcul 17 à un instant t2 défini par le dispositif d'ordonnancement 12, les valeurs c1X1, c2X2, c3X3 et c4X4 sont obtenues. Les quatre instructions I45 à I48 peuvent par exemple être exécutées simultanément, si la deuxième unité de calcul 17 peut exécuter différentes instructions en parallèle.

Le troisième bloc d'instructions B3 comprend une instruction I49, définie de la manière suivante :

I49 : addition de c1X1, c2X2, c3X3 et c4X4.

Cette instruction I49 est exécutée par la deuxième unité de calcul 17 à un instant t3 défini par le dispositif d'ordonnancement 12.

Les instants t1, t2 et t3 peuvent être définis, par exemple, de la manière suivante. Si l'on suppose que la valeur X doit être disponible à un instant T0, que les chargements nécessitent une durée $\Delta t1$, que les multiplications nécessitent une durée $\Delta t2$ et que l'addition nécessite une durée $\Delta t3$, les instants t1, t2 et t3 sont définis par les expressions :

$$t1=T0-\Delta t1-\Delta t2-\Delta t3$$

$$t2=T0-\Delta t2-\Delta t3$$

$$t3=T0-\Delta t3$$

Dans cet exemple, le temps d'exécution 13 est décalé d'une durée $\Delta t$ par rapport au temps d'ordonnancement 12a. Cette durée $\Delta t$ correspond à la durée $\Delta t$ telle que définie dans la description de la figure 2. Si le temps d'exécution 13 correspond à une horloge, cette durée $\Delta t$ peut correspondre à un ou plusieurs cycles d'horloge. Les instants t1, t2 et t3, qui correspondent à des nombres de cycles d'horloge, sont codés sur seize bits pour obtenir les labels TAG1, TAG2 et TAG3. Ces labels sont placés dans la partie labels 22a de la mémoire adressable par le contenu 22. Le temps d'exécution 13 est également codé sur seize bits.

L'exécution du programme commence à l'instant $\Delta t$. Lorsque le temps d'exécution 13 est égal à t1, le descripteur B1* est envoyé au séquenceur d'instructions 30. Pour le dispositif d'ordonnancement 12, l'exécution du programme 11 commence à l'instant zéro. Par conséquent, par rapport au temps d'ordonnancement 12a, le descripteur B1* est en fait envoyé au séquenceur d'instructions 30 à l'instant t1-$\Delta t$. De la sorte, le bloc d'instructions B1 est effectivement exécuté par la première unité de calcul 16 à l'instant t1 défini par le dispositif d'ordonnancement 12. Un raisonnement analogue s'applique pour les blocs d'instructions B2 et B3.

Un système de traitement tel que celui représenté sur la figure 4b peut être utilisé dans un processeur de rendu d'images, destiné à calculer des valeurs de pixels en vue d'un affichage de ces pixels sur un écran. Un tel processeur de rendu d'images peut être incorporé, par exemple, dans un décodeur, un dispositif récepteur décodeur pour télévision, une télévision, une unité centrale d'ordinateur ou un écran d'ordinateur. Un tel processeur de rendu d'images peut être utilisé dans un système de communication comprenant au moins un émetteur apte à envoyer des signaux représentant au moins une image, un réseau de transmission, et un récepteur apte à recevoir lesdits signaux.

## Revendications

**1.** Système de traitement comprenant au moins une unité de calcul (16) destinée à exécuter au moins un bloc (B1) d'une ou plusieurs instructions (I1), ledit bloc étant associé à au moins un instant (t1) auquel il doit être exécuté par ladite unité de calcul, ledit instant étant déterminé à partir d'un temps d'ordonnancement (12a), ledit système de traitement comprenant des moyens de comparaison (14) dudit instant avec un temps d'exécution (13) lié au temps d'ordonnancement, et des moyens de déclenchement (15) pour faire exécuter ou non ledit bloc d'instructions par l'unité de calcul en fonction de ladite comparaison, un bloc d'instructions étant associé à au moins un label (TAG1) représentant au moins un instant auquel il doit être exécuté, les labels étant stockés dans une mémoire adressable par le contenu (22) apte à comparer un label donné avec le temps d'exécution et à délivrer un descripteur (B1*) du bloc d'instructions correspondant audit label donné lorsque le label donné est égal au temps d'exécution.

2.  Système de traitement selon la revendication 1, **caractérisé en ce qu'**un bloc d'instructions est en outre associé à au moins un identifiant (P1) indiquant l'unité de calcul par laquelle il doit être exécuté, le descripteur étant envoyé à un séquenceur d'instructions (30) apte à faire exécuter les instructions du bloc correspondant audit descripteur par l'unité de calcul correspondant audit identifiant.

3.  Procédé de traitement comprenant au moins une étape d'exécution réalisée par une unité de calcul destinée à exécuter au moins un bloc d'une ou plusieurs instructions associé à au moins un instant auquel il doit être exécuté par ladite unité de calcul, ledit instant étant déterminé à partir d'un temps d'ordonnancement, ledit procédé de traitement étant **caractérisé en ce qu'**il comprend une étape de comparaison dudit instant avec un temps d'exécution lié au temps d'ordonnancement, et une étape de déclenchement pour faire exécuter ou non ledit bloc d'instructions par l'unité de calcul en fonction d'un résultat de ladite étape de comparaison, un bloc d'instructions étant associé à au moins un label représentant au moins un instant auquel il doit être exécuté, les labels étant stockés dans une mémoire adressable par le contenu apte à comparer un label donné avec le temps d'exécution et à délivrer un descripteur du bloc d'instructions correspondant audit label donné lorsque le label donné est égal au temps d'exécution.

4.  Procédé de traitement selon la revendication 3, **caractérisé en ce qu'**un bloc d'instructions est en outre associé à au moins un identifiant indiquant l'unité de calcul par laquelle il doit être exécuté, le descripteur étant envoyé à un séquenceur d'instructions apte à faire exécuter les instructions du bloc correspondant audit descripteur par l'unité de calcul correspondant audit identifiant.

5.  Programme comprenant des instructions de code de programme pour l'exécution des étapes du procédé selon la revendication 3 lorsque ledit programme est exécuté sur un microprocesseur.

6.  Processeur de rendu d'images comprenant un système de traitement selon l'une des revendications 1 ou 2.

7.  Dispositif récepteur décodeur pour télévision comprenant au moins un processeur de rendu d'images selon la revendication 6.

8.  Dispositif comprenant au moins un écran destiné à afficher des images et un processeur de rendu d'images selon la revendication 6.

9.  Système de communication comprenant au moins un émetteur apte à envoyer des signaux représentant au moins une image, un réseau de transmission, un récepteur apte à recevoir les dits signaux et un processeur de rendu d'images selon la revendication 6.

**FIG. 1**

B1(t1) B2(t2) B3(t3) B4(t4) B5(t5)

11

16

CU1

| 22 | |
|---|---|
| 22a | 22b |
| TAG1 | B1* |
| TAG2 | B2* |
| TAG3 | B3* |
| TAG4 | B4* |
| TAG5 | B5* |

EXEC TIME

13

# FIG. 2

FIG. 3

EP 1 341 080 A1

EP 1 341 080 A1

# FIG. 4a

c1, c2, c3, c4

X1, X2, X3, X4 → ⊗ → Σ → X

# FIG. 4b

EXEC TIME — 13

22a, 22, 22b

| TAG1 | B1* |
| TAG2 | B2* |
| TAG3 | B3* |

SEQ

| B1* | P1 |
| B2* | P2 |
| B3* | P2 |

30

$B1_{(t1)}$  $B2_{(t2)}$  $B3_{(t3)}$

| I41 | I45 | I49 |
| I42 | I46 | |
| I43 | I47 | |
| I44 | I48 | |

11

CU1 — 16

CU2 — 17

Office européen
des brevets

**RAPPORT DE RECHERCHE EUROPEENNE**

Numéro de la demande

EP 03 07 5448

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 959 575 A (MOTOROLA INC) 24 novembre 1999 (1999-11-24) * le document en entier * --- | 1-5 | G06F9/38 |
| D,Y | EP 0 840 213 A (BIAX CORP) 6 mai 1998 (1998-05-06) * page 4, ligne 15 - ligne 19 * * page 23, ligne 28 - ligne 36 * --- | 1-5 | |
| A | US 6 292 887 B1 (JANNIELLO JAMES P) 18 septembre 2001 (2001-09-18) * le document en entier * --- | 1,3,6-9 | |
| P,X | US 6 389 529 B1 (ARIMILLI RAVI KUMAR ET AL) 14 mai 2002 (2002-05-14) * le document en entier * --- | 1,3 | |
| A | US 5 835 745 A (SAXE JAMES BENJAMIN ET AL) 10 novembre 1998 (1998-11-10) * le document en entier * ----- | 1,3 | **DOMAINES TECHNIQUES RECHERCHES (Int.Cl.7)** G06F |

Le présent rapport a été établi pour toutes les revendications

| Lieu de la recherche | Date d'achèvement de la recherche | Examinateur |
|---|---|---|
| LA HAYE | 7 avril 2003 | Klocke, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.** EP 03 07 5448

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2003

| Document brevet cité au rapport de recherche | | Date de publication | Membre(s) de la famille de brevet(s) | | Date de publication |
|---|---|---|---|---|---|
| EP 0959575 | A | 24-11-1999 | EP | 0959575 A1 | 24-11-1999 |
| EP 0840213 | A | 06-05-1998 | US | 4847755 A | 11-07-1989 |
| | | | EP | 0840213 A2 | 06-05-1998 |
| | | | DE | 3650696 D1 | 01-10-1998 |
| | | | DE | 3650696 T2 | 04-02-1999 |
| | | | EP | 0247146 A1 | 02-12-1987 |
| | | | JP | 10187443 A | 21-07-1998 |
| | | | JP | 10187640 A | 21-07-1998 |
| | | | JP | 63501605 T | 16-06-1988 |
| | | | JP | 3084282 B2 | 04-09-2000 |
| | | | WO | 8702799 A1 | 07-05-1987 |
| | | | US | 5517628 A | 14-05-1996 |
| | | | US | 5021945 A | 04-06-1991 |
| | | | US | 6253313 B1 | 26-06-2001 |
| | | | US | 5765037 A | 09-06-1998 |
| US 6292887 | B1 | 18-09-2001 | AUCUN | | |
| US 6389529 | B1 | 14-05-2002 | AUCUN | | |
| US 5835745 | A | 10-11-1998 | AUCUN | | |

EPO FORM P0460

Pour tout renseignement concernant cette annexe : voir Journal Officiel de l'Office européen des brevets, No.12/82